# EUROPEAN PATENT APPLICATION

(11) **EP 4 620 921 A1**
(43) Date of publication of application: **24.09.2025**
(21) Application number: 23929915.9
(22) Date of filing: 31.10.2023
(51) Int. Cl.: C02F 1/02, C02F 7/00

(54) **WATER CIRCULATION PROMOTING DEVICE**

(30) Priority: 31.03.2023 CN 202310345684
(71) Applicant: China Three Gorges Corporation, Wuhan, Hubei 430010 (CN)
(72) Inventor: ZHOU, Yan, Wuhan, Hubei 430010 (CN); CHEN, Fangzheng, Wuhan, Hubei 430010 (CN); LI, Chong, Wuhan, Hubei 430010 (CN); CHEN, Lei, Wuhan, Hubei 430010 (CN); WANG, Dianchang, Wuhan, Hubei 430010 (CN); CHANG, Manqi, Wuhan, Hubei 430010 (CN); CHEN, Yasong, Wuhan, Hubei 430010 (CN); DAI, Lingquan, Wuhan, Hubei 430010 (CN); LIAO, Yongxin, Wuhan, Hubei 430010 (CN)
(74) Representative: Keller Schneider Patent- und Markenanwälte AG
(86) International application number: PCT/CN2023/128169
(87) International publication number: WO 2024/198345

(57) **Abstract**

A water circulation and reaeration device comprises: a floating body (10), configured to float on the water surface; fan vanes (13), mounted on the upper surface of the floating body (10); a main shaft (20), with its first end fixed to the bottom of the floating body (10), and its second end connected to paddle blades (30), wherein the paddle blades (30) are configured to induce water flow from the surrounding water into an adjacent water layer when the main shaft (20) is rotated in one direction by the rotational force generated by the fan vanes (13). The water circulation and reaeration device promotes convection between deep water and shallow water, improves the dissolved oxygen content of the deep water, and is beneficial to stability of the water ecosystem. The water circulation and reaeration device relies on wind energy to work, there is no need to arrange an energy supply system during its deployment, and there is no relative movement relationship between its main components, so manual maintenance is basically not needed during a relatively long life cycle, deployment cost and operational maintenance cost is low, and no noise is generated when working, so as not to adversely affect the lives of the residents.

## Description

The present application claims priority to Chinese Patent Application No. 202310345684.8, filed to the Chinese National Intellectual Property Administration (CNIPA) on March 31, 2023 and entitled "WATER CIRCULATION AND REAERATION DEVICE", the entire content of which is incorporated herein by reference.

### TECHNICAL FIELD

The present application relates to the technical field of aquatic ecosystem restoration, in particular relates to a water circulation and reaeration device.

### BACKGROUND

Human activities have brought unprecedented pressure on water ecology and water environment of lakes and basins thereof, resulting in a series of environmental and ecological crises, including the shrinking of water surface area, deterioration of water quality, frequent occurrences of floods and the reduction or even loss of biodiversity. For the management of lake water environment, in addition to controlling external nutrient inputs and internal nutrient release, improving the dissolved oxygen content of the water body is also one of the most effective methods for aquatic ecosystem restoration. Dissolved oxygen in the water is an important prerequisite for most aquatic organisms to maintain metabolism and for ecosystems to achieve material cycling, and a decrease in dissolved oxygen content would not only leads to the mass death aquatic organisms, but also lead to enhancement of the competitive advantage of cyanobacteria due to the reduced metabolism of nutrient in the water, creating favorable conditions for outbreak of water blooms, which poses a serious threat to biodiversity. Under conditions of severe oxygen depletion, anaerobic microorganisms in deep water layers would gain a competitive advantage, and their metabolites by-products can cause the water body to blacken and emit foul odors, which directly affects the lift quality of nearby residents and local socio-economic development.

At present, the main methods for reoxygenating lake water bodies involve the installation of flow-enhancing or jet-flow aerator to improve water circulation and increase the re-oxygenation efficiency in enclosed water body. However, aerators typically have high energy consumption, require cable installation during deployment and continuous power supply, and need regular maintenance to clean nozzles and prevent clogging. Consequently, both equipment investment and operational maintenance costs are high. Furthermore, the noise generated during the operation of aerators can also adversely affect the lives of nearby residents.

### SUMMARY OF THE INVENTION

Therefore, the technical problem to be solved by the present application is to overcome defects of high deployment cost and operational maintenance cost of aerators and large disturbance to environment in the prior art, so as to provide a water circulation and reaeration device.

The present application provides a water circulation and reaeration device that comprises:
a floating body, configured to float on the water surface;
fan vanes, mounted on the upper surface of the floating body;
a main shaft, with its first end fixed to the bottom of the floating body, and its second end connected to paddle blades, wherein the paddle blades are configured to induce water flow from the surrounding water into an adjacent water layer when the main shaft is rotated in one direction by the rotational force generated by the fan vanes.

Optionally, the floating body comprises a heat conducting component located at its upper portion, which is thermally connected to one end of a heat transfer component, the other end of which is thermally connected to the lower end of the main shaft.

Optionally, the heat transfer component is thermally connected to the paddle blades.

Optionally, the floating body has a hollow structure, the heat transfer component comprises at least one heat transfer pipe, a first end of each heat transfer pipe extends into the floating body and is thermally connected to the heat conduction component, a second end of each heat transfer pipe passes through the main shaft and is fixedly connected to a respective one of the paddle blades.

Optionally, a portion of each heat transfer pipe extending from the second end of the main shaft is fixed to a blade edge of the respective one of the paddle blades;
and/or the main shaft comprises an inner core, a connection cylinder, and an outer cylinder, an outer wall of the inner core is fixed to an inner wall of the connection cylinder, an outer wall of the connection cylinder is fixed to an inner wall of the outer cylinder, through-holes aligned with the heat transfer pipes are provided at an end face of the connection cylinder, the number of the through-holes corresponding to the number of the heat transfer pipes, each of the heat transfer pipes passes through a corresponding through-hole to connect with the respective the paddle blade.

Optionally, a flow-guiding tube is disposed around the outer periphery of the main shaft, and the main shaft is fixedly connected to the flow-guiding tube by means of an intermediate connection component.

Optionally, the intermediate connection component comprises connection blades distributed around an outer periphery of the main shaft, the two ends of each of the connection blades are respectively fixedly connected to an outer wall of the main shaft and fixedly connected to an inner wall of the flow guide tube, and the connection blades are configured to induce water flow from the surrounding water into the adjacent water layer when the main shaft is rotated in one direction, the flow direction of the connection blades being identical to that of the paddle blades.

Optionally, a bottom surface of the floating body is a transition surface configured to guide water that flows in a vertical direction of the main shaft to transit into flowing in a direction parallel to a horizontal plane.

Optionally, the fan vanes are upstanding vanes, and a vane surface of each of the fan vanes is perpendicular to a horizontal plane.

Optionally, a rotatable anchoring structure is arranged at the second end of the main shaft, and the anchoring structure is configured to limit a movement range of the main shaft.

The present application has the following advantages:
1. The present application provides a water circulation and reaeration device, wherein fan vanes are mounted on the upper surface of the floating body, a main shaft is fixed to the bottom of the floating body, the main shaft is connected to paddle blades, the floating body is rotated by the fan vanes under an action of wind and thus drives the paddle blades to rotate, so that water body around the paddle blades is induced to an adjacent water layer, thereby promoting convection between deep water layer and shallow water layer, improving the dissolved oxygen content of the deep water layer, and being beneficial to stability of the aquatic ecosystem. The water circulation and reaeration device relies on wind energy to work, there is no need to arrange an energy supply system during its deployment, and there is no relative movement relationship between its main components, so manual maintenance is basically not needed during a relatively long life cycle, deployment cost and operational maintenance cost is low, and no noise is generated when working, so as not to adversely affect the lives of the residents.
2. The present application provides a water circulation and reaeration device, wherein the floating body comprises a heat conducting component located at its upper portion, which can absorb solar radiation heat and transfer the heat to the second end of the main shaft through a heat transfer component, thereby heating the water body around the second end of the main shaft, reducing the density thereof, and promoting convection of the water body.
3. The present application provides a water circulation and reaeration device, wherein the heat transfer component is connected to the paddle blades, and since the contact area between the paddle blades and the water body is large, the heating efficiency for the surrounding water body is high.
4. The present application provides a water circulation and reaeration device, wherein the floating body has a hollow structure, the heat transfer component comprises heat transfer pipes, one end of each heat transfer pipe extends into the floating body and is thermally connected to the heat conducting component, the other end of each heat transfer pipe passes through the main shaft and is connected to a respective one of the paddle blades, so that the heat transfer pipes are not directly exposed to the water body before extending out of the main shaft, thereby reducing heat loss in the process of heat transfer, and the heat can be efficiently transferred to the deep water layer, so as to ensure an warming effect for the deep water layer, and to promote the convection of the water body.
5. The present application provides a water circulation and reaeration device, wherein an outer cylinder of the main shaft is connected to an inner core through a connection cylinder, through-holes are provided in the connection cylinder for the heat transfer pipes to pass through, and the middle sections of the heat transfer pipes are located between the outer cylinder and the inner core, so as to further reduce heat loss during heat transfer and improve the efficiency of heat transfer.
6. The present application provides a water circulation and reaeration device, wherein a portion of each heat transfer pipe extending from the second end of the main shaft is fixed to a blade edge of the respective one of the paddle blades, so that heat is transferred to the paddle blades without affecting the shape of the blade surface, and the water delivery effect of the paddle blades is ensured.
7. The present application provides a water circulation and reaeration device, wherein a flow-guiding tube is disposed around an outer periphery of the main shaft, so that a flow-guiding channel is formed between the flow-guiding tube and the main shaft, and when the main shaft is rotated, the flow-guiding channel enables water around one end of the main shaft to flow to the other end of the main shaft, so as to increase the convection span of different water layers, and to enhance an convective effect of the water body.
8. The present application provides a water circulation and reaeration device, wherein the connection blades are fixed to both the main shaft and the flow-guiding tube at the same time, and the pushing direction of the connection blades are identical to the pushing direction of the paddle blades, so that the connection blades are able to cooperate with the paddle blades when the main shaft is rotated, and the surrounding water body is induced along the same direction, so as to realize convection of the water body in a large span.
9. The present application provides a water circulation and reaeration device, wherein the water body in a deeper water layer is induced to a shallow water layer, and then flows along the transition surface, with a large flow distance in the shallow water layer, so that it is mixed more fully with water body in the shallow water layer, thereby improving the convection effect of the water body.
10. The present application provides a water circulation and reaeration device, wherein the anchoring structure can limit a movement range of the device, so as to ensure that the device keeps working in the deployment area, and at the same time facilitate the subsequent recovery of the device, and the anchoring structure is rotatably connected to the main shaft, so it would not interfere with the normal operation of the device.

### BRIEF DESCRIPTION OF THE DRAWINGS

In order to more clearly illustrate the technical solutions in the specific examples of the present application or in the prior art, hereinafter, the drawings that need to be used in the description of the specific examples or the prior art will be briefly introduced. Apparently, the drawings described below only represent some examples of the present application. Those with ordinary skill in the art may also obtain other drawings according to these drawings without making creative effort.
FIG. 1 is a front view of the water circulation and reaeration device of an embodiment of the present application;
FIG. 2 is a top view of the water circulation and reaeration device of an embodiment of the present application;
FIG. 3 is a cross-sectional view of the water circulation and reaeration device of an embodiment of the present application;
FIG. 4 is a B-B sectional view of FIG. 1;
FIG. 5 is a C-C sectional view of FIG. 1;
FIG. 6 is a schematic diagram of the connection between paddle blades and heat transfer pipes in the water circulation and reaeration device of an embodiment of the present application;
FIG. 7 is a schematic diagram of the structure of the main shaft in the water circulation and reaeration device of an embodiment of the present application.

### Description of reference signs:

10, floating body; 101, first cavity; 11, heat absorption plate; 12, bottom plate; 121, transition surface; 13, fan vane; 20, main shaft; 21, inner core; 22, connection cylinder; 221, through-hole; 23, outer cylinder; 30, paddle blade; 40, heat transfer pipe; 50, flow-guiding tube; 60, connection blade; 70, anchoring ring.

### DETAILED DESCRIPTION

The technical solutions of the present application will be described clearly and completely below in combination with the drawings, and apparently, the described embodiments only represent part of the embodiments of the present application and not all of the embodiments. Based on the embodiments described in the present application, all other embodiments obtainable by a person skilled in the art without making creative effort fall within the protection range of the present application.

In the description of the present application, it is noted that the orientation or positional relationships indicated by terms such as 'center', 'upper', "lower", 'left', 'right', 'vertical', 'horizontal', "inside", 'outside', and etc., are based on those shown in the drawings, and are intended only for a purpose of facilitating and simplifying the description of the present application, and are not intended to indicate or imply that the device or element referred to must have a particular orientation, or must be constructed and operated in a particular orientation, and therefore are not intended to be understood as a limitation to the present application. Furthermore, terms such as 'first', "second", and 'third' are used for a descriptive purpose only and are not intended to be understood as indicating or implying relative importance.

In the description of the present application, it is noted that, unless otherwise definitely specified and limited, terms such as 'mounted', "connected", and 'coupled' are intended to be understood in a broad sense, for example, it may be a fixed connection, a detachable connection, or an integral connection; it may be a mechanical connection or an electrical connection; it may be a direct connection or an indirect connection through an intermediate medium; and it may be internal communication of two elements. For those skilled in the art, the specific meanings of the above terms in the present application can be understood based on specific circumstances thereof.

In addition, technical features involved in different embodiments of the present application described below may be combined with each other as long as they do not constitute a conflict with each other.

### Embodiments

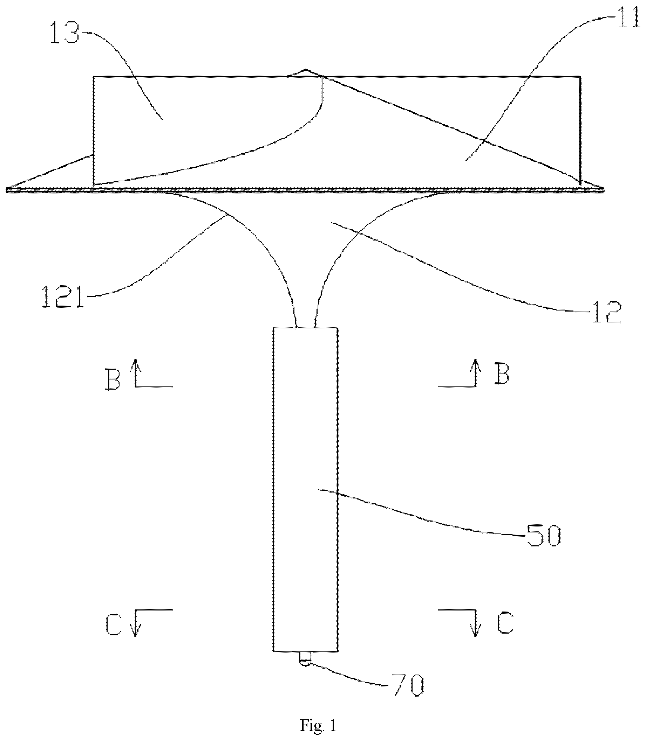

Referring to FIG. 1 to FIG. 7, an embodiment of the present application provides a water circulation and reaeration device, which comprises:
a floating body 10, configured to float on the water surface;
fan vanes 13, mounted on the upper surface of the floating body 10;
a main shaft 20, with its first end fixed to the bottom of the floating body 10, and its second end connected to paddle blades 30, wherein the paddle blades 30 are configured to induce water flow from the surrounding water into an adjacent water layer when the main shaft 20 is rotated in one direction by the rotational force generated by the fan vanes 13.

The present application provides a water circulation and reaeration device, wherein fan vanes 13 are mounted on the upper surface of the floating body 10, a main shaft 20 is fixed to the bottom of the floating body 10, the main shaft 20 is connected to paddle blades 30, the floating body 10 is rotated by the fan vanes 13 under an action of wind and thus drives the paddle blades 30 to rotate, so that water body around the paddle blades 30 is induced to an adjacent water layer, thereby promoting convection between deep water layer and shallow water layer, improving the dissolved oxygen content of the deep water layer, and being beneficial to stability of the aquatic ecosystem. The water circulation and reaeration device relies on wind energy to work, there is no need to arrange an energy supply system during its deployment, and there is no relative movement relationship between its main components, so manual maintenance is basically not needed during a relatively long life cycle, deployment and operational maintenance cost is low, and no noise is generated when working, so as not to adversely affect the lives of the residents.

As a preferred example, the floating body 10 comprises a heat conducting component located at its upper portion, which is thermally connected to one end of a heat transfer component, the other end of which is thermally connected to the lower end of the main shaft 20.

In the present embodiment, the floating body 10 comprises a heat conducting component located at its upper portion, which can absorb solar radiation heat and transfer the heat to the second end of the main shaft 20 through a heat transfer component, thereby heating the water body around the second end of the main shaft 20, reducing the density thereof, and promoting convection of the water body.

On the basis of the above example, in a preferred example, the heat transfer component is thermally connected to the paddle blades 30.

In the present example, the heat transfer component is connected to the paddle blades 30, and since the contact area between the paddle blades 30 and the water body is large, the heating efficiency for the surrounding waterbody is high.

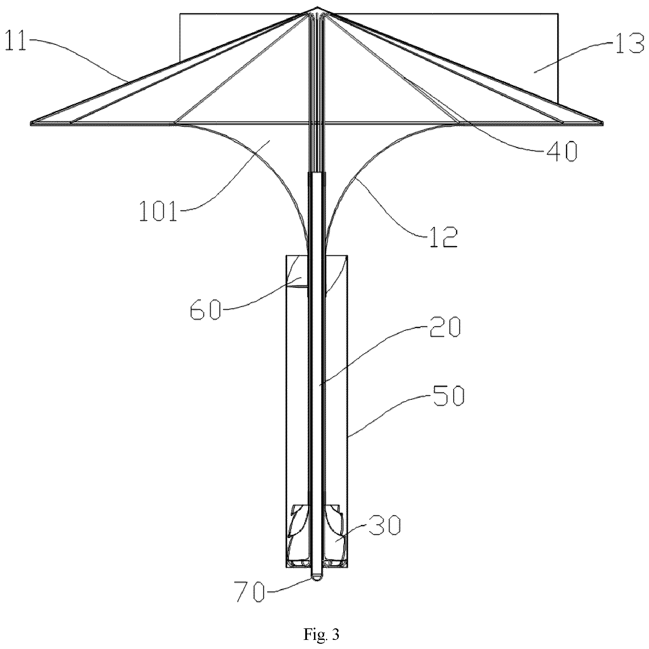

In the present embodiment, the structure and size of the floating body 10 are not specifically limited, as long as it enables the water circulation and reaeration device to float as a whole. As an example, the floating body 10 is a solid structure, and is made of wood, the upper surface of the floating body 10 is provided with fan vanes 13, which are made of a material with good thermal conductivity, such as copper or aluminum, and the fan vanes 13 are directly used as a heat conducting component and connected to the heat transfer component. As another example, the floating body 10 has a hollow structure, specifically, referring to FIGs.1 and 3, a heat absorption plate 11 is sealedly connected to a bottom plate 12 to form the floating body 10 with a first cavity 101 therein, fan vanes 13 are fixed to the heat absorption plate 11, which is made of a material with good thermally conductivity, such as copper or aluminum. Furthermore, the heat absorption plate 11 can have a conical cylinder shape as shown in FIG. 1, and the elevation angle thereof can be designed according to the lighting conditions of a position for deployment of the water circulation and reaeration device, in order to maximize the efficiency of absorbing solar radiation heat thereof. By designing a volume of the first cavity 101, the edge of the heat absorption plate 11 on the upper surface is exactly located on the surface of the water when the device is in normal use. The first cavity 101 is equipped with a heat transfer component mounted therein, which transfers the heat absorbed by the heat absorption plate 11 to the paddle blades 30 at the tail end of the main shaft 20.

In the present embodiment, the structure of the heat transfer component is not specifically limited. As an example, the main shaft 20 extends into the first cavity 101, and the main shaft 20 itself acts as a heat transfer component to transfer the heat from the heat absorption plate 11 to the paddle blades 30. As another example, the heat transfer component comprises heat transfer pipes 40, a first end of each heat transfer pipe 40 extends into the floating body 10 and is connected to the heat conducting component, a second end of each heat transfer pipe 40 passes through the main shaft 20 and is fixedly connected to a respective one of the paddle blades 30. Specifically, referring to FIG. 3, the first end of each heat transfer pipe 40 is fixedly bonded to a wall surface of the heat absorption plate 11 in the first cavity 101, the number of heat transfer pipes 40 is not specifically limited, and it may be a single one connected only to a single paddle blade 30, or it may be multiple ones connected to part or all of the paddle blades 30. As a preferred example, the number of the heat transfer pipes 40 is the same as the number of the paddle blades 30, and the heat transfer pipes 40 are connected to the paddle blades 30 in one-to-one correspondence.

Further, a connection gap between the heat transfer pipes 40 and the heat absorption plate 11 can be filled with a heat conduction medium, such as solder or heat conduction paste.

In the present example, the floating body 10 has a hollow structure, the heat transfer component comprises heat transfer pipes 40, one end of each heat transfer pipe 40 extends into the floating body 10 and is thermally connected to the heat conducting component, the other end of each heat transfer pipe passes through the main shaft 20 and is connected to a respective one of the paddle blades 30, so that the heat transfer pipes 40 are not directly exposed to the water body before extending out of the main shaft 20, thereby reducing heat loss in the process of heat transfer, and the heat can be efficiently transferred to the deep water layer, so as to ensure an warming effect for the deep water layer, and to promote the convection of the water body.

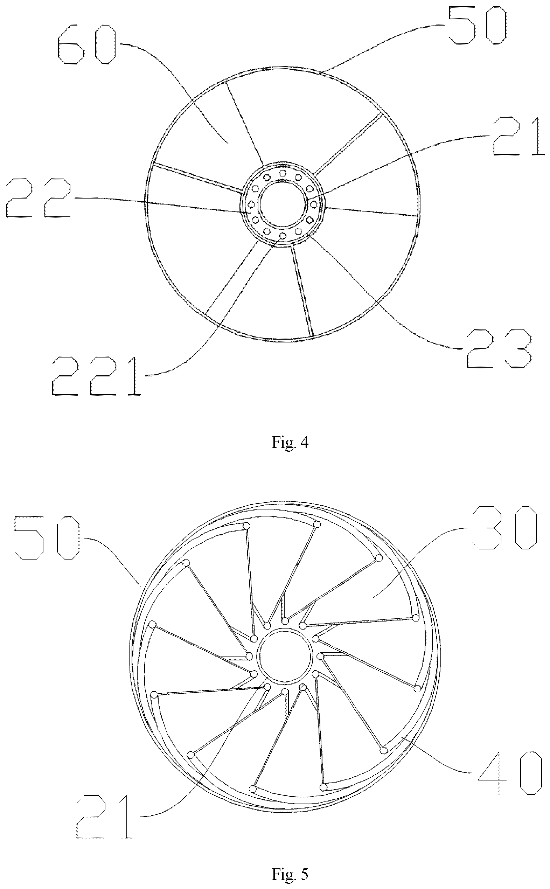

In this embodiment, the structure of the main shaft 20 is not specifically limited. As an example, the main shaft 20 is a hollow pipe with an opening at the first end and sealed at the second end, mounting holes are provided at the second end of the main shaft 20, wherein the number of the mounting holes is the same as the number of the heat transfer pipes 40, and the first end of the main shaft 20 passes through the bottom plate 12 and then extends into the first cavity 101 to be sealedly connected to the floating body 10, and the heat transfer pipes 40 extend from the inside of the first cavity 101 into the interior of the main shaft 20 along the opening at the first end of the main shaft 20, and then extend out from the mounting holes to be connected to the paddle blades. As another example, referring to FIGs. 4, 6, and 7, the main shaft 20 comprises an inner core 21, a connection cylinder 22, and an outer cylinder 23, an outer wall of the inner core 21 is fixed to an inner wall of the connection cylinder 22, an outer wall of the connection cylinder 22 is fixed to an inner wall of the outer cylinder 23, through-holes 221 aligned with the heat transfer pipes 40 are provided at an end face of the connection cylinder 22, the number of the through-holes 221 corresponding to the number of the heat transfer pipes 40, each of the heat transfer pipes 40 passes through a corresponding through-hole 221 to connected to a respective paddle blade 30. In a specific example, in order to save production cost and facilitate assembly, two connection cylinders 22 are provided, and the two connection cylinders 22 are respectively fixed to two ends of the outer cylinder 23, and the heat transfer pipes 40 extend into the main shaft 20 through the through-holes 221 at the first end of the main shaft 20, and extend out of the main shaft 20 through the through-hole 221 at the second end of the main shaft 20 to be connected with the paddle blades 30.

In the present example, an outer cylinder 23 of the main shaft 20 is connected to an inner core 21 through a connection cylinder 22, through-holes 221 are provided in the connection cylinder 22 for the heat transfer pipes 40 to pass through, and the middle sections of the heat transfer pipes 40 are located between the outer cylinder 23 and the inner core 21, so as to further reduce heat loss during heat transfer and improve the efficiency of heat transfer.

On the basis of the above example, in a preferred example, a portion of each heat transfer pipe 40 extending from the second end of the main shaft 20 is fixed to a blade edge of the respective one of the paddle blades 30.

In the present example, a portion of each heat transfer pipe 40 extending from the second end of the main shaft 20 is fixed to a blade edge of the respective one of the paddle blades 30, so that heat is transferred to the paddle blades 30 without affecting the shape of the blade surface, and the water delivery effect of the paddle blades 30 is ensured.

In the present embodiment, the connection relationship between the paddle blades 30 and the main shaft 20 is not specifically limited, as long as the paddle blades 30 are able to be rotated together with the main shaft 20. In one example, the paddle blades 30 may be directly fixed to the outer cylinder 23 of the main shaft 20, and each heat transfer pipe 40 is fixed to a blade edge of the respective one of the paddle blades 30 after extending out from through-holes 221 of the main shaft 20. In another example, referring to FIGs. 1, 5 and 6, a portion of each heat transfer pipe 40 extending from through-holes 221 of the main shaft 20 is a bent section, the heat transfer pipes 40 are fixed in position relative to the main shaft 20, and the paddle blades 30 are fixedly connected only to the bent section of each of the heat transfer pipes 40. In the preset example, there is a larger contact area between the paddle blades 30 and the heat transfer pipes 40, which facilitates the heat transfer pipes 40 transferring the heat to the paddle blades 30.

Further, the connection gap between the heat transfer pipes 40 and the paddle blades 30 can be filled with a heat conduction medium, such as solder or heat conduction paste.

As a preferred example, referring to FIGs. 1 and 3, a flow-guiding tube 50 is disposed around an outer periphery of the main shaft 20, and the main shaft 20 is fixedly connected to the flow-guiding tube 50 by means of an intermediate connection component.

In the present example, a flow-guiding tube 50 is disposed around the outer periphery of the main shaft 20, so that a flow-guiding channel is formed between the flow-guiding tube 50 and the main shaft 20, and when the main shaft 20 is rotated, the flow-guiding channel enables water around one end of the main shaft 20 to flow to the other end of the main shaft 20, so as to increase the convection span of different water layers and to enhance a convection effect of the water body.

In the present embodiment, the structure of the intermediate connection component is not specifically limited, as long as the intermediate connection component can be connected to both the main shaft 20 and the flow-guiding tube 50 at the same time, so as to form a stable channel between the main shaft 20 and the flow-guiding tube 50. As an example, the intermediate connection component comprises a connection rod, one end of the connection rod is fixed to the main shaft 20, and the other end thereof is fixed to the flow-guiding tube 50. As another example, referring to FIG. 3, the intermediate connection component comprises connection blades 60 distributed around an outer periphery of the main shaft 20, the two ends of each of the connection blades 60 are respectively fixedly connected to an outer wall of the main shaft 20 and fixedly connected to an inner wall of the flow-guiding tube 50, and the connection blades 60 are configured to induce water flow from the surrounding water into the adjacent water layer when the main shaft 20 is rotated in one direction, the flow direction of the connection blades 60 being identical to that of the paddle blades 30.

In the present example, the connection blades 60 are fixed to both the main shaft 20 and the flow-guiding tube 50 at the same time, and the pushing direction of the connection blades 60 is identical to the pushing direction of the paddle blades 30, so that the connection blades 60 is able to cooperate with the paddle blades 30 when the main shaft 20 is rotated, and the surrounding water body is induced along the same direction, so as to realize convection of the water body in a large span.

In the present embodiment, a shape of the bottom of the floating body 10 is not specifically limited. As an example, the bottom surface of the floating body 10 can be a flat surface, and the water in a deeper water layer is pushed to a shallow water layer, impacts the bottom of the floating body 10 and then flows along the bottom surface of the floating body 10. As another example, a bottom surface of the floating body 10 is a transition surface 121 configured to guide water that flows in a vertical direction of the main shaft 20 to transit into flowing in a direction parallel to a horizontal plane. Specifically, the main shaft 20 is vertically provided in the water, and the transition surface 121 is capable of smoothly transiting the vertical water flow along the axial direction of the main shaft 20 into a horizontal flow.

In the present example, the water body in a deeper water layer is induced to a shallow water layer, and then flows along the transition surface 121, with a large flow distance in the shallow water layer, so that it is mixed more fully with the water body in the shallow water layer, thereby improving the convection effect of the water body.

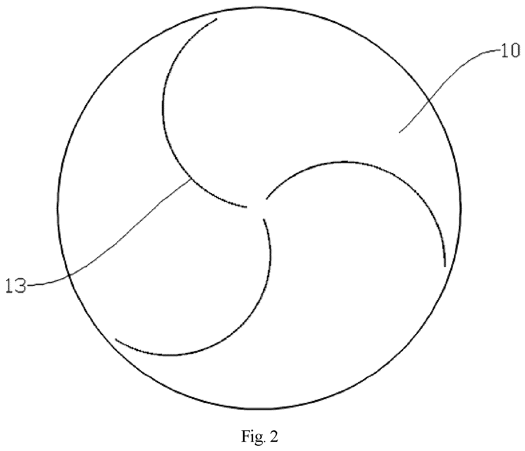

As a preferred example, referring to FIGs. 1 and 2, the fan vanes 13 are upstanding vanes, and a vane surface of each of the fan vanes 13 is perpendicular to a horizontal plane, thereby effectively utilizing the wind energy by enabling the device to form a rotational torque in the horizontal plane.

In the present embodiment, a material of the fan vanes 13 is not specifically limited. As an example, the fan vanes 13 are made of plastic. As another example, the fan vanes 13 are made of a material with good thermal conductivity, such as copper or aluminum, and the fan vanes 13 can be used together with the heat absorption plate 11 as the heat conducting component of the device to absorb the solar radiation heat and transfer the heat to the second end of the main shaft 20 through the heat transfer component.

As a preferred example, a rotatable anchoring structure is arranged at the second end of the main shaft 20, and the anchoring structure is configured to limit a movement range of the main shaft 20.

In the present example, the anchoring structure can limit a movement range of the device, so as to ensure that the device keeps working in the deployment area, and at the same time facilitate the subsequent recovery of the device, and the anchoring structure is rotatably connected to the main shaft 20, so it would not interfere with the normal work of the device.

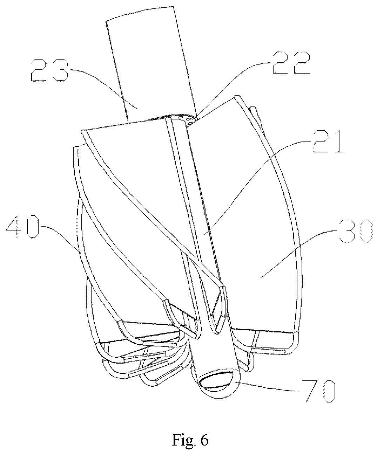

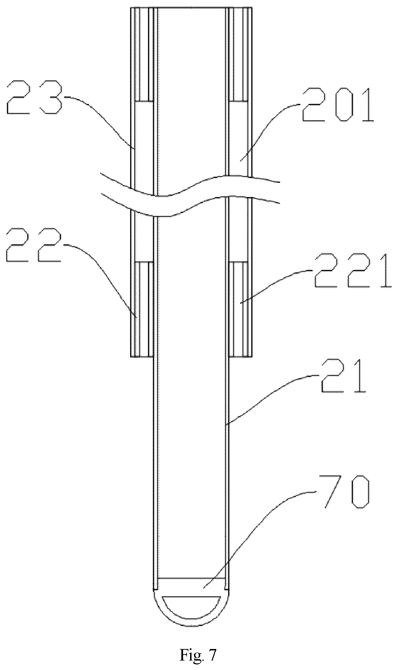

As a specific embodiment, referring to FIGS. 6 and 7, the anchoring structure comprises an anchoring ring 70 rotatably connected to the inner core 21 of the main shaft 20, the anchoring ring 70 is tied with an elastic rope, and the other end of the rope is fixed to the bed of the waterbody.

Apparently, the above embodiments are merely examples made for clear description but not for limiting the implementing ways. Those skilled in the art can also make modifications or variations in other different forms based on the above description. It is unnecessary and impossible to exhaustively list all the implementing ways herein. Any obvious modification or variation derived from this still fall within the protection scope of the present invention application.

## Claims

1. A water circulation and reaeration device, **characterized by** comprising:
a floating body (10), configured to float on the water surface;
fan vanes (13), mounted on the upper surface of the floating body (10);
a main shaft (20), with its first end fixed to the bottom of the floating body (10), and its second end connected to paddle blades (30), wherein the paddle blades (30) are configured to induce water flow from the surrounding water into an adjacent water layer when the main shaft (20) is rotated in one direction by the rotational force generated by the fan vanes (13).

2. The water circulation and reaeration device according to claim 1, **characterized in that** the floating body (10) comprises a heat conducting component located at its upper portion, which is thermally connected to one end of a heat transfer component, the other end of which is thermally connected to the lower end of the main shaft (20).

3. The water circulation and reaeration device according to claim 2, **characterized in that** the heat transfer component is thermally connected to the paddle blades (30).

4. The water circulation and reaeration device according to claim 3, **characterized in that** the floating body (10) has a hollow structure, the heat transfer component comprises at least one heat transfer pipe (40), a first end of each heat transfer pipe (40) extends into the floating body (10) and is thermally connected to the heat conduction component, a second end of each heat transfer pipe (40) passes through the main shaft (20) and is fixedly connected to a respective one of the paddle blades (30).

5. The water circulation and reaeration device according to claim 4, **characterized in that** a portion of each heat transfer pipe (40) extending from the second end of the main shaft (20) is fixed to a blade edge of the respective one of the paddle blades (30);
and/or the main shaft (20) comprises an inner core (21), a connection cylinder (22), and an outer cylinder (23), an outer wall of the inner core (21) is fixed to an inner wall of the connection cylinder (22), an outer wall of the connection cylinder (22) is fixed to an inner wall of the outer cylinder (23), through-holes (221) aligned with the heat transfer pipes (40) are provided at an end face of the connection cylinder (22), the number of the through-holes (221) corresponding to the number of the heat transfer pipes (40), each of the heat transfer pipes (40) passes through a corresponding through-hole (221) to connect with the respective paddle blades (30).

6. The water circulation and reaeration device according to claim 1, **characterized in that** a flow-guiding tube (50) is disposed around the outer periphery of the main shaft (20), and the main shaft (20) is fixedly connected to the flow-guiding tube (50) by means of an intermediate connection component.

7. The water circulation and reaeration device according to claim 6, **characterized in that** the intermediate connection component comprises connection blades (60) distributed around an outer periphery of the main shaft (20), the two ends of each of the connection blades (60) are respectively fixedly connected to an outer wall of the main shaft (20) and fixedly connected to an inner wall of the flow guide tube (50), and the connection blades (60) are configured to induce water flow from the surrounding water into the adjacent water layer when the main shaft (20) is rotated in one direction, the flow direction of the connection blades (60) being identical to that of the paddle blades (30).

8. The water circulation and reaeration device according to any one of claims 1-7, **characterized in that** a bottom surface of the floating body (10) is a transition surface (121) configured to guide water that flows in a vertical direction of the main shaft (20) to transit into flowing in a direction parallel to a horizontal plane.

9. The water circulation and reaeration device according to any one of claims 1-7, **characterized in that** the fan vanes (13) are upstanding vanes, and a vane surface of each of the fan vanes (13) is perpendicular to a horizontal plane.

10. The water circulation and reaeration device according to any one of claims 1-7, **characterized in that** a rotatable anchoring structure is arranged at the second end of the main shaft (20), and the anchoring structure is configured to limit a movement range of the main shaft (20).
